Europäisches Patentamt

European Patent Office

Office européen des brevets

(11) Veröffentlichungsnummer: **0 282 833**
**A2**

## (12) EUROPÄISCHE PATENTANMELDUNG

(21) Anmeldenummer: 88103330.2

(22) Anmeldetag: 04.03.88

(51) Int. Cl.4: **B65G 1/04**

(30) Priorität: 14.03.87 DE 3708401

(43) Veröffentlichungstag der Anmeldung:
21.09.88 Patentblatt 88/38

(84) Benannte Vertragsstaaten:
**AT BE CH DE ES FR GB GR IT LI NL SE**

(71) Anmelder: **Dornieden, Heinz**
**Deipe Stegge 225**
**D-4420 Coesfeld(DE)**

(72) Erfinder: **Dornieden, Heinz**
**Deipe Stegge 225**
**D-4420 Coesfeld(DE)**

(74) Vertreter: **Habbel, Hans-Georg, Dipl.-Ing.**
**Postfach 3429 Am Kanonengraben 11**
**D-4400 Münster(DE)**

(54) **Langmateriallagereinrichtung und Verfahren zu seinem Betreiben.**

(57) Bei den bekannten Langmateriallagern, bei denen die Materialboxen stirnseitig ergriffen und aus Kragarmregalen entnommen werden können, ist eine erhebliche Zeit für das Aufnehmen der vollen Materialbox, Abgeben derselben am Auslagerplatz, Übernehmen einer leeren Materialbox, Abgeben derselben an den Förderer und Stapeln der leeren Materialbox im Kragarmregallager notwendig, wobei dann erst der Förderer eine weitere volle Materialbox ergreifen und auf den Unterflurwagen übergeben kann.

Um die Zugriffszeiten zu verringern, wird vorgeschlagen, den Unterflurwagen zur Aufnahme von zwei Materialboxen und den Auslagerplatz zur Aufnahme von zwei Materialboxen auszubilden und so die Möglichkeit zu schaffen, daß während der Fahrtzeiten des Unterflurwagens der Förderer im Langmateriallager bereits eine neue volle Materialbox zur Verfügung stellen kann und während der Fahrtzeit des Unterflurwagens das Eingliedern der leeren Materialbox in das Kragarmregal vornehmen kann.

Fig. 1

## "Langmateriallagereinrichtung und Verfahren zu seinem Betreiben"

Die Erfindung bezieht sich auf ein Langmateriallager gemäß dem Oberbegriff des Hauptanspruches und auf ein Verfahren zum Betreiben eines solchen Langmateriallagers gemäß dem Oberbegriff des Anspruches 2.

Aus der DE 30 12 826 A1 ist ein Langmateriallager bekannt, wobei diese bekannte Anordnung im wesentlichen dadurch gekennzeichnet ist, daß die Materialboxen stirnseitig von dem Förderer ergriffen werden können, so daß unabhängige Horizontal-und Vertikalbewegungen durchgeführt werden können. Die Ein-und Auslagerung aus den Kragarmregalen sowie die Vertikalbewegung wird durch zwei verfahrbare Hubvorrichtungen eines Förderers ausgeführt. Der horizontalee Transport aus dem Lager zur Verarbeitungsstelle erfolgt über einen vom Hubvorgang unabhängigen, niedrigen Unterflurwagen.

Hierdurch werden kurze Zugriffszeiten durch Entkopplung der horizontalen und vertikalen Förderung möglich, wobei zusätzlich eine Verkürzung des erforderlichen Zeitraumes für ein Arbeitsspiel durch die diagonalen Leerfahrten des Förderers erreicht wird.

Aus der EP 0 213 289 A1 ist ein Langmateriallager bekannt, das als Wabenlager ausgebildet ist und bei welchem ein Transportwagen in den Gassen vor den Stirnseiten der Regalwaben verfahrbar ist.

Bei beiden bekannten Geräten wird angestrebt, die Anzahl der Lagerspiele pro Zeiteinheit und damit die Wirtschaftlichkeit zu erhöhen bzw. die Zugriffszeiten zu verkürzen. Hierfür werden mehrere Transportwagen zur Verfügung gestellt, die unabhängig voneinander be-und entladen und an den Förderer herangefahren werden können, um damit einen Zeitverzug am Auslagerplatz zu vermeiden.

Schließlich ist es aus der DE-Z: Deutsche Hebe-und Fördertechnik 1982 Nr. 11/12 bekannt, den Hubtisch eines Förderers bei Wabenlagern mit Aufnahmebühnen für mehrere Materialboxen zu versehen. Diese Materialboxen werden erst am Ende der Regalgasse auf Verschiebewagen übergeben bzw. von dort übernommen, die an Auslagerplätze be-und entladen werden, die für das gleichzeitige Auslagern bzw. Einlagern vorgesehen sind.

Der Erfindung liegt die Aufgabe zugrunde, die bisher schon angestrebte schnelle Zugriffsmöglichkeit noch zu verkürzen, d.h. das sogenannte Lagerspiel noch zusätzlich zu optimieren.

Diese der Erfindung zugrundeliegende Aufgabe wird durch die Lehre des Hauptanspruches gelöst.

Mit anderen Worten ausgedrückt, wird durch den er findungsgemäßen Vorschlag erreicht, daß während des Ein-und Auslagerns einer vollen und einer leeren Materialbox vom Unterflurwagen auf den Auslagerplatz der Förderer im Regalbereich bereits die nächste gewünschte Materialbox anfahren, ergreifen und soweit in eine Bereitstellungsposition absenken kann, daß sie sofort vom Unterflurwagen aufgenommen werden kann, wenn dieser diese Übergabestelle erreicht.

Sobald die Materialbox auf dem Unterflurwagen abgesetzt ist, fährt der Unterflurwagen und der Förderer zu der Lagergasse, in der die am Auslagerplatz vom Unterflurwagen aufgenommene leere Materialbox eingelagert werden soll. Hier nimmt der Förderer die Materialbox auf und setzt sie ins Kragarmlager und fährt sofort die nächste gewünschte volle Materialbox an. In dieser Zeit fährt der Unterflurwagen den Auslagerplatz an, wechselt hier die Materialboxen aus, d.h. gibt seine volle Materialbox an den Auslagerplatz ab und übernimmt vom Auslagerplatz die leere Materialbox, so daß sich dann der vorbeschriebene Vorgang wiederholen kann. Hierbei kann so vorgegangen werden, daß auf dem Auslagerplatz die geleerte Materialbox in eine Bereitschaftsstellung verschoben wird und von dieser aus auf den Unterflurwagen übergeben wird, wobei dann gleichzeitig der Unterflurwagen während der Übernahme der leeren Materialbox die volle Materialbox auf den Auslagerplatz abgibt.

Es kann aber auch so vorgegangen werden, daß der Unterflurwagen mit der auf ihm angeordneten vollen Materialbox den Auslagerplatz derart ansteuert, daß er nunmehr die volle Materialbox an den Platz abgibt, von dem er vorher die leere Materialbox ent nommen hat, dann verfährt und vom Auslagerplatz die volle Materialbox aufnimmt.

Beide Arbeitsweisen sind möglich, wobei die zuerst beschriebene schneller, aber möglicherweise kostenaufwendiger ist.

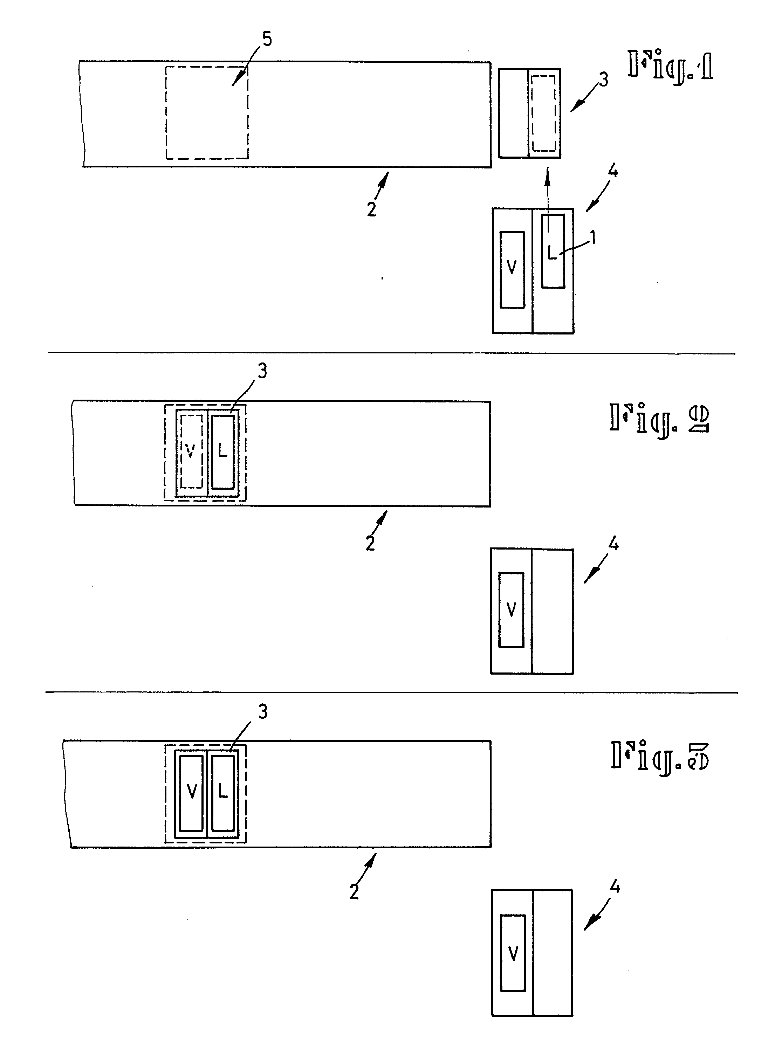

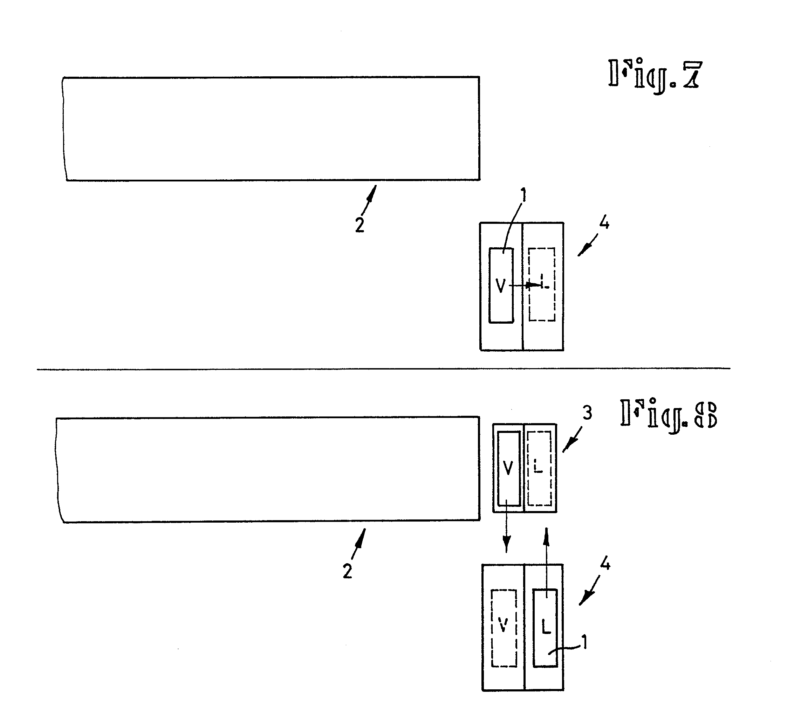

Die erfindungsgemäße Arbeitsweise wird nachfolgend anhand der Schemadarstellung gemäß den Fig. 1 bis 6 erläutert, wobei die Fig. 7 und 8 eine abgeänderte Ausführungsform gemäß den Fig. 5 und 6 zeigen.

In den Zeichnungen ist in Fig. 1 mit 1 eine Materialbox bezeichnet, mit 2 das eigentliche Langmateriallager, mit 3 ein Unterflurwagen und mit 4 ein Auslagerplatz, wobei bei dem in Fig. 1 dargestellten Ausführungsbeispiel eine volle Materialbox V auf dem Auslagerplatz 4 steht und gerade eine leere Materialbox L auf den Unterflurwagen 3 übergeben wird (die auf den Unterflurwagen 3 abgegebene Materialbox ist gestrichelt eingezeichnet).

In der Zwischenzeit hat der Förderer innerhalb des Langmateriallagers 2 eine volle Materialbox ergriffen und diese an eine Übergabestelle verbracht, die in Fig. 1 gestrichelt mit 5 bezeichnet ist und steht nunmehr in seiner untersten Bereitschaftsstellung, um diese volle Materialbox auf den Unterflurwagen zu übergeben.

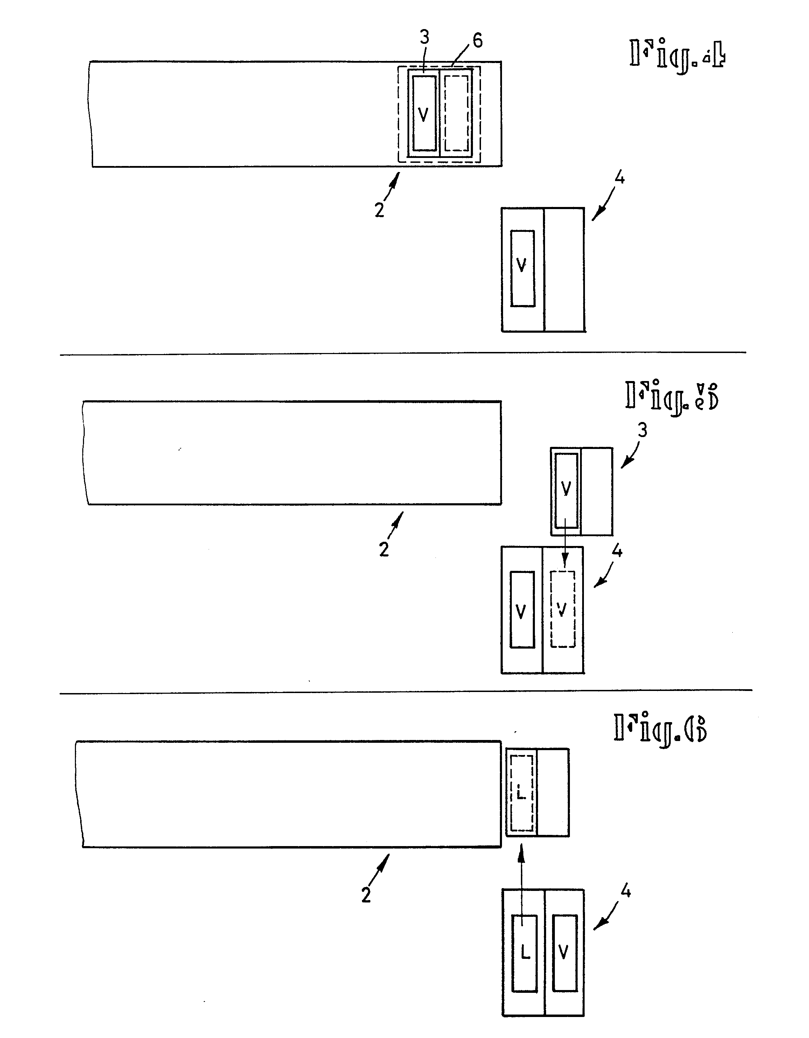

Gemäß Fig. 2 ist der Unterflurwagen 3 zur Übergabestelle 5 gefahren und nimmt nunmehr die volle Materialbox V vom Förderer auf (gestrichelt dargestellt), so wie dies in Fig. 3 in vollen Linien dargestellt ist, wo nunmehr (Fig. 3) der Unterflurwagen 3 sowohl eine volle Materialbox V wie auch eine leere Materialbox L trägt.

Aus Fig. 4 ist ersichtlich, daß der Unterflurwagen 3 zu einer neuen Übergabestelle 6 verfahren ist, die der Gasse des Langmateriallagers zugeordnet ist, in der die leere Materialbox gestapelt werden soll. Der Förderer hat diese leere Materialbox vom Unterflurwagen entnommen (deshalb ist in Fig. 4 die Materialbox gestrichelt dargestellt) und während nunmehr der Förderer die im Langmateriallager erforderliche Hubbewegung ausführt, die leere Materialbox in das entsprechende Kragarmlager abstellt, die vorbestimmte volle neue Materialbox ansteuert, ergreift und beispielsweise an den Übergabeplatz 5 verbringt, fährt - wie dies Fig. 5 zeigt - der Unterflurwagen 3 in den Bereich des Auslagerplatzes 4 und gibt die volle Materialbox V auf den Auslagerplatz 4 ab, wie dies gestrichelt dargestellt ist. Dann verfährt der Unterflurwagen 3 ein kurzes Stück zurück (Fig. 6), nimmt die leere Materialbox L auf und dasselbe Spiel wie gemäß Fig. 1 bis 5 beginnt.

Fig. 7 zeigt eine abgeänderte Ausführungsform dahingehend, daß, nachdem die volle Materialbox V am Auslagerplatz leergearbeitet ist, diese Materialbox in die gestrichelte Lage für eine leere Materialbox L verfahren worden ist. Der Unterflurwagen 4 übernimmt somit in einer einzigen Stellung immer die leere Materialbox L an derselben Stelle und gibt in derselben Stellung die volle Materialbox V ab, so wie dies in Fig. 8 dargestellt ist.

Aus der voraufgehenden Beschreibung ist erkennbar, daß durch die beschriebene Arbeitsweise die Ab hängigkeiten der Funktion zwischen Unterflurwagen und dem Förderer innerhalb des Langmateriallagers entkoppelt ist, so daß Wartezeiten weitgehend vermieden werden. Es wird eine erhebliche Verkürzung der sogenannten Zugriffszeiten erreicht.

## Ansprüche

1. Langmateriallagereinrichtung für Materialboxen (1) mit einem Hochregallager (2) aus mehreren, durch Gassen voneinander getrennten, durch einen Unterflurwagen (3) unterfahrbaren Kragarmregalen, einem Förderer, der die Materialboxen (1) stirnseitig untergreifen kann und mit dessen Hilfe die Materialboxen (1) quer zu den Gassen und in diesen gegenüber den Regalen auf-und abbewegbar sind sowie in die Regale ein-und ausgelagert werden können sowie einem Auslagerplatz (4) für die Materialboxen zur weiteren Verarbeitung des Langmaterials, dadurch gekennzeichnet, daß der Unterflurwagen (3) zur Aufnahme von zwei Materialboxen (1) und der Auslegerplatz (4) als Wechselplatz zur gleichzeitigen Abgabe einer vollen und der Übernahme einer leeren Materialbox (1) ausgebildet ist.

2. Verfahren zum Betreiben eines Langmateriallagers für Materialboxen mit einem Hochregallager aus mehreren, durch Gassen voneinander getrennten, durch einen Unterflurwagen unterfahrbaren Kragarmregalen, einem Förderer, der die Materialboxen stirnseitig untergreift und mit dessen Hilfe die Materialboxen quer zu den Gassen und in diesen gegenüber den Regalen auf-und abbewegbar sind sowie in die Regale ein-und ausgelagert werden können, wobei die von dem Unterflurwagen aufgenommenen Materialboxen auf einen Auslagerplatz abgegeben werden, dadurch gekenn zeichnet, daß

a) der Unterflurwagen am Auslagerplatz eine volle Materialbox (V) abgibt und eine leere Materialbox (L) aufnimmt,

b) während der Übergabe und Übernahme der Materialboxen am Auslagerplatz der Förderer eine volle Materialbox den Kragarmregalen entnimmt und zur Übergabe an den Unterflurwagen im unteren Teil der zugehörigen Gasse bereitstellt,

c) der Unterflurwagen zur Übergabestelle fährt und die volle Materialbox aufnimmt,

d) der Förderer und der Unterflurwagen zu der Gasse verfahren werden, die der leeren Materialbox zugeordnet ist und der Förderer hier die leere Materialbox dem Unterflurwagen entnimmt und in dem vorbestimmten Kragarmregal einlagert.

3. Verfahren nach Anspruch 2, dadurch gekennzeichnet, daß während der Abgabe der vollen Materialbox vom Unterflurwagen auf den Auslagerplatz gleichzeitig der Unterflurwagen die leere Materialbox vom Auslagerplatz übernimmt.

Fig. 1

Fig. 2

Fig. 3

Fig. 4

3    6

V

2

4

V

Fig. 5

2

3

V

V    V

4

Fig. 6

2

L

L    V

4

Fig.7

2

1

4

V → L

Fig.8

3

2

V    L

V    L

4

1